# DEMANDE DE BREVET EUROPEEN

(11) **EP 1 306 674 A1**
(43) Date de publication de la demande: **02.05.2003**
(21) Numéro de dépôt: 02292613.3
(22) Date de dépôt: 22.10.2002
(51) Int. Cl.: G01N 35/08

(54) **Dispositif d'injection parallelisée et synchronisée pour injections séquentielles de réactifs differents**

(30) Priorité: 24.10.2001 FR 0113734
(71) Demandeur: COMMISSARIAT A L'ENERGIE ATOMIQUE, 75752 Paris Cedex 15 (FR)
(72) Inventeur: Fouillet, Yves, 38340 Voreppe (FR); Sarrut, Nicolas, 38170 Seyssinet Pariset (FR); Gruss, Antoine, 38170 Seyssinet Pariset (FR)
(74) Mandataire: Poulin, Gérard

(57) **Abrégé**

L'invention concerne un dispositif microfluidique d'injection de trains de chambres mobiles de réaction (102, 103) avec séparateurs (101) non miscibles dans des micro-canaux (21 à 26), comprenant :
- des moyens d'injection (10) pour injecter en alternance et en parallèle dans les micro-canaux du liquide pour former les chambres mobiles de réaction et du liquide pour former les séparateurs,
- des moyens de contrôle de la progression de l'un des deux liquides, disposés pour intervenir sur une zone (31) de chaque micro-canal délimitant un volume à injecter de ce liquide, les moyens de contrôle étant aptes à provoquer l'arrêt ou le ralentissement de la progression de ce liquide sur la zone de chaque micro-canal en exerçant une action basée sur une propriété physico-chimique de ce liquide, cette action n'ayant pas d'effet direct sur l'autre liquide.

## Description

### DOMAINE TECHNIQUE

L'invention concerne un dispositif d'injection parallélisée et synchronisée pour injections séquentielles de réactifs différents. Elle concerne également un réacteur biologique et un procédé de mise en oeuvre d'un protocole biologique, biochimique ou chimique sur des échantillons.

De manière générale, l'invention s'applique à tous les domaines ayant besoin d'analyses chimiques ou biologiques à grands débits ou HTS (pour "High Through-put Screening").

### ETAT DE LA TECHNIQUE ANTERIEURE

L'un des principaux attraits de la microfluidique pour des applications biologiques ou chimiques est de pouvoir miniaturiser, paralléliser et sérialiser les réactions. Ceci est par exemple très important pour des analyses génomiques nécessitant des automates permettant d'étudier un grand nombre de gènes avec des volumes minimum et des temps d'analyse minimum. Il en est de même pour les analyses protéomiques.

La miniaturisation a été rendue possible grâce aux développements des microtechnologies sur silicium, verre ou plastique. Il existe une littérature abondante décrivant des réalisations de micro-canaux de dimension submicronique à quelques dizaines de micromètres sur du silicium, du verre ou du plastique.

La miniaturisation permet d'intégrer un grand nombre de canaux parallèles sur une très petite surface. Ainsi, il est possible d'intégrer plusieurs canaux travaillant simultanément. On peut se référer à ce sujet à l'article "DNA Analysis with Capillary Array Electrophoresis Microplates" de R.A. MATHIES et al., paru dans Micro Total Analysis Systems'98.

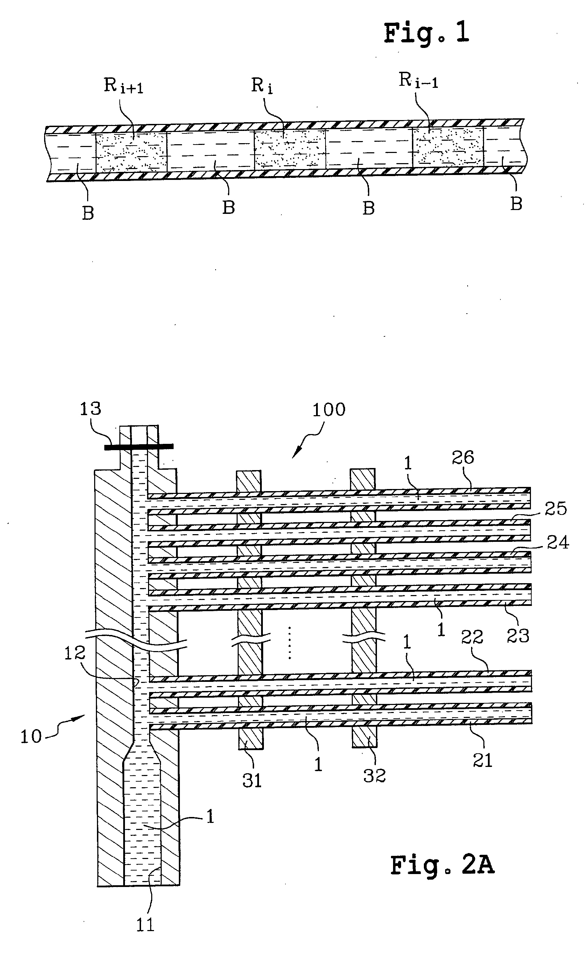

La réalisation consiste à faire circuler, dans au moins un canal, une pluralité de réactions différentes. On parle alors de flux continu ou de FIA (pour "Flow Injection Analysis"). La figure 1 représente, de façon schématique, un train de réactions permettant de faire circuler plusieurs volumes de réactions différentes. Dans le micro-canal 1 circulent des réactions Rᵢ₋₁, Rᵢ, Rᵢ₊₁ dans le sens indiqué par la flèche. Il peut être nécessaire de placer des séparateurs pour différencier deux réactions successives afin d'éviter ou de limiter le mélange et la contamination entre réactions. On parle alors de chambres mobiles de réaction Rᵢ₋₁, Rᵢ, Rᵢ₊₁ et de bouchons de séparation B. Si les liquides de réaction et de séparation sont miscibles, il faut veiller à ce qu'il n'y ait pas de diffusion entre réactions successives différentes (voir le document WO-A-00/42212).

Il est aussi possible d'utiliser des bouchons de séparation formés par un liquide non miscible avec les volumes de réaction. On parle alors de "train de chambres mobiles de réaction avec séparateurs pouvant être non miscibles" ou par abréviation de "trains de réactions". Il est possible d'utiliser une solution aqueuse pour les réactions (cas le plus courant pour la biologie) et de l'huile (minérale, silicone...) ou un solvant organique non miscible à l'eau (l'octane par exemple) pour les bouchons de séparation.

L'une des difficultés techniques pour réaliser des micro-systèmes basés sur le principe de la FIA sur un grand nombre de micro-canaux est de concevoir des automates permettant de fabriquer les trains de réactions. Il faut en effet injecter et faire circuler, de manière précise et contrôlée, les trains de réactions dans les micro-canaux.

Le document WO-A-01/12327 divulgue un procédé permettant de fabriquer et de mettre en mouvement, dans un micro-canal principal, un train de volumes réactionnels individualisés les uns des autres par des volumes de séparation. La mise en mouvement des liquides s'effectue de manière électrocinétique à l'aide d'une pluralité d'électrodes placées le long du micro-canal principal. L'effet électrocinétique n'agit que sur les chambres mobiles de réaction et non sur les bouchons de séparation. Ceci permet un contrôle en position des volumes réactionnels.

La notion d'action sélective sur une phase d'un système exploitant deux phases est déjà bien connue dans un autre domaine. Par exemple, pour des applications pétrolières, il existe des vannes automatiques qui sont ouvertes quand des gaz circulent et qui se ferment automatiquement dès que du pétrole arrive au niveau de la vanne. Le principe consiste à utiliser un système de refroidissement permettant d'obtenir des températures suffisamment basses dans une portion de canal pour geler le pétrole qui ainsi bouche le canal. Quand c'est du gaz qui est présent, celui-ci peut circuler librement. On peut se reporter à ce sujet aux brevets américains N° 4 203 472, 4 269 212, 5 101 848 ainsi qu'à la demande internationale WO-A-94/29690.

Le document WO-A-00/30751 divulgue une méthode de transfert de petits volumes de liquide d'un réservoir du type plaque à puits vers un micro-système. Le système de transfert est réalisé au moyen d'une pluralité de petits tubes. L'injection se fait par une différence de pression appliquée entre les deux extrémités des tubes. La notion de congélation d'un liquide pour contrôler un volume d'injection est aussi rapportée. L'enseignement de ce document ne s'applique pas à la notion de trains de réactions.

Il est tout à fait possible, avec les outils de l'art connu, de réaliser, sur une voie et pour des volumes de plusieurs µl, un train de réactions. Il suffit par exemple d'utiliser un système de vannes et de pompes. Il est possible aussi de fabriquer à l'avance et de stocker dans un tube un train de réactions. Il est possible aussi d'utiliser un système de pression ou de pousse-seringue pour aspirer successivement des réactifs différents préalablement déposés dans des puits ou dans une plaque à puits.

Les techniques de l'art connu ne permettent cependant pas d'obtenir le même résultat avec des volumes de réaction pouvant être très petits (inférieurs au µl) et sur une pluralité de canaux en parallèle, le même réactif devant être injecté à la fois sur tous les canaux. Dans ce cas, la petite taille des canaux induit en effet des forces capillaires qui sont prépondérantes par rapport aux forces de viscosité. Les effets capillaires sont très largement aléatoires car dépendant du mouillage, des tensions interfaciales entre les deux fluides, de la température et de la rugosité des parois des canaux. Ainsi, dans la pratique, il est très difficiles de contrôler la synchronisation des trains en parallèle.

### EXPOSÉ DE L'INVENTION

L'invention apporte une solution à ce problème présenté par l'art connu.

Elle a pour objet un dispositif microfluidique d'injection parallélisée et synchronisée de trains de chambres mobiles de réaction avec séparateurs non miscibles dans des micro-canaux, comprenant :
- des moyens d'injection pour injecter en alternance et en parallèle dans les micro-canaux du liquide pour former les chambres mobiles de réaction et du liquide pour former les séparateurs,
- des premiers moyens de contrôle de la progression de l'un des deux liquides dans les micro-canaux, disposés pour intervenir sur une zone de chaque micro-canal délimitant un volume à injecter de ce liquide dans chaque micro-canal, les premiers moyens de contrôle étant aptes à provoquer, lorsqu'ils sont mis en oeuvre, l'arrêt ou le ralentissement de la progression de ce liquide sur ladite zone de chaque micro-canal en exerçant une action basée sur une propriété physico-chimique de ce liquide, cette action n'ayant pas d'effet direct sur l'autre liquide.

Les premiers moyens de contrôle peuvent être des moyens permettant de déplacer ladite zone d'intervention de chaque micro-canal afin de modifier le volume à injecter dudit liquide parmi les deux liquides.

De préférence, les moyens d'injection comprennent une pièce possédant un canal d'injection communiquant avec les premières extrémités des micro-canaux. Avantageusement, le canal d'injection a l'une de ses extrémités communiquant avec une entrée de canal par où les liquides sont injectés, l'autre de ses extrémités étant équipée de moyens d'évacuation des liquides présents dans le canal d'injection. Les moyens d'évacuation peuvent comprendre une vanne. Le canal d'injection et ladite zone de chaque micro-canal peuvent être disposés de manière parallèle, les micro-canaux leur étant perpendiculaires.

Les premiers moyens de contrôle peuvent être choisis parmi des moyens fonctionnant en mode thermique, des moyens fonctionnant en mode de ralentissement par viscosité, des moyens fonctionnant en mode à effet magnétique, des moyens fonctionnant en mode à effet par électromouillage et des moyens fonctionnant en mode à pincement de tubes. Les premiers moyens de contrôle fonctionnant en mode thermique, les moyens de contrôle peuvent être choisis parmi des dispositifs à effet Peltier et des dispositifs à fluide caloporteur. Ces moyens peuvent alors être des moyens aptes à provoquer la congélation de l'un des deux liquides.

Le dispositif microfluidique peut comprendre en outre au moins des deuxièmes moyens de contrôle de la progression dudit liquide parmi les deux liquides, placés en aval des premiers moyens de contrôle et étant aptes à provoquer, lorsqu'ils sont mis en oeuvre, l'arrêt ou le ralentissement de la progression de ce liquide sur une zone de chaque micro-canal en exerçant une action basée sur une propriété physico-chimique de ce liquide, cette action n'ayant pas d'effet direct sur l'autre liquide. Les deuxièmes moyens de contrôle peuvent être choisis parmi des moyens fonctionnant en mode thermique, des moyens fonctionnant en mode de ralentissement par viscosité, des moyens fonctionnant en mode à effet magnétique, des moyens fonctionnant en mode à effet par électromouillage et des moyens fonctionnant en mode à pincement de tubes. Les deuxièmes moyens de contrôle fonctionnant en mode thermique, les moyens de contrôle peuvent être choisis parmi des dispositifs à effet Peltier et des dispositifs à fluide caloporteur. Ces moyens peuvent alors être des moyens aptes à provoquer la congélation de l'un des deux liquides.

L'invention a aussi pour objet un réacteur biologique comprenant :
- des premiers moyens distributeurs de liquide pour former des chambres mobiles de réaction,
- des deuxièmes moyens distributeurs de liquide pour former des séparateurs non miscibles,
- un dispositif microfluidique tel que défini ci-dessus dont les moyens d'injection sont reliés en alternance aux premiers moyens distributeurs et aux deuxièmes moyens distributeurs pour fournir, dans les micro-canaux du dispositif microfluidique, des trains de chambres mobiles de réaction avec séparateurs non miscibles,
- un micro-système permettant de réaliser un protocole biologique sur des échantillons circulant dans des canaux du micro-système, le micro-système comprenant pour chaque canal un premier orifice d'entrée relié à un micro-canal correspondant du dispositif microfluidique et un deuxième orifice d'entrée relié à des moyens d'injection d'échantillons correspondants dans les chambres de réaction.

L'invention a encore pour objet un procédé de mise en oeuvre d'un protocole biologique, biochimique ou chimique sur des échantillons comprenant :
- la formation dans un dispositif microfluidique tel que défini ci-dessus de trains de chambres mobiles de réaction avec séparateurs non miscibles dans des micro-canaux, les trains étant formés en parallèle et de manière synchronisée,
- l'injection simultanée des trains de chambres mobiles de réaction avec séparateurs non miscibles, formés dans les micro-canaux du dispositif microfluidique, dans les canaux d'un micro-système en nombre correspondant aux micro-canaux du dispositif microfluidique,
- l'injection simultanée et en parallèle des échantillons dans les canaux du micro-système pour les mélanger de manière synchronisée aux chambres mobiles de réaction circulant dans les canaux du micro-système,
- la réalisation du protocole biologique, biochimique ou chimique sur les échantillons ayant été mélangés aux chambres mobiles de réaction.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1, déjà décrite, représente de façon schématique un train de réactions permettant de faire circuler plusieurs volumes de réactions différentes ;
- les figures 2A à 2G sont des vues en coupe d'un dispositif d'injection parallélisée et synchronisée selon l'invention et illustrant son utilisation ;
- la figure 3 est une vue en détail d'un micro-canal d'un dispositif d'injection parallélisée et synchronisée selon l'invention, utilisant des moyens de contrôle magnétique ;
- la figure 4 est une vue en détail d'un micro-canal d'un dispositif d'injection parallélisée et synchronisée selon l'invention utilisant des moyens de contrôle par électromouillage ;
- la figure 5 est une vue en détail d'un micro-canal d'un dispositif d'injection parallélisée et synchronisée selon l'invention utilisant des moyens de contrôle à pincement de tubes ;
- la figure 6 représente, de manière schématisée, un réacteur biologique utilisant le dispositif d'injection parallélisée et synchronisée selon la présente invention ;
- la figure 7 est une vue en coupe longitudinale d'un composant microfluidique utilisée dans le réacteur biologique de la figure 6.

### EXPOSÉ DÉTAILLÉ DE MODES DE RÉALISATION DE L'INVENTION

Les figures 2A à 2G sont des vues en coupe d'un dispositif d'injection parallélisée et synchronisée selon l'invention.

Le dispositif d'injection comprend une pièce 10 de forme allongée et percée selon son axe longitudinal d'un trou traversant formant chambre d'injection et comprenant une entrée de canal 11 prolongée par un canal d'injection 12. La pièce 10 comporte également des trous d'axe perpendiculaire à l'axe du canal d'injection 12 et aboutissant au canal d'injection. Ces trous servent de logement à des premières extrémités de micro-capillaires 21 à 26 ou micro-canaux. les micro-capillaires sont par exemple réalisés à partir de silice fondue et sont gainés de polyimide, par exemple du type décrit dans la demande internationale WO-A-00/30751. Ils peuvent être de très petit diamètre, typiquement de quelques µm à quelques centaines de µm. Leur fixation sur la pièce 10 peut être obtenue par collage.

Les deuxièmes extrémités des micro-capillaires peuvent être reliées à un micro-système non représenté.

L'entrée 11 du canal est connectée à un tube d'où sont injectés les liquides successifs à faire circuler dans les micro-canaux. Une vanne 13 est disposée à l'extrémité du canal d'injection opposée à l'entrée 11. Les injections peuvent se faire grâce à une pompe, à un pousse-seringue ou par une différence de pression entre l'amont et l'aval de l'ensemble du circuit microfluidique.

Le dispositif d'injection peut être réalisé en mettant en oeuvre d'autres techniques, en particulier des techniques de micro-usinage telles que celles qui sont utilisées dans le document WO-A-01/07 159.

Comme le montre la figure 2A, les micro-capillaires ou micro-canaux 21 à 26 sont parallèles entre eux et disposés sur un même plan.

Deux éléments thermiques sont disposés perpendiculairement aux micro-capillaires. Ils sont donc parallèles au canal d'injection 12 et définissent des zones thermiques 31 et 32. Les zones thermiques peuvent être réalisées à partir de résistances à effet Peltier. Elles peuvent aussi être réalisées en utilisant un fluide (liquide ou gazeux) caloporteur, circulant à proximité des micro-capillaires. Il est cependant avantageux de choisir une conception permettant de bien localiser la zone thermique le long des micro-capillaires. Par exemple, on peut utiliser une pièce réalisée dans un matériau présentant une bonne conductivité thermique tel que le laiton, le cuivre ou l'aluminium et comportant des trous dans lesquels sont enfilés les micro-capillaires. Cette pièce est collée à un dispositif à effet Peltier. Cette configuration permet de bien délimiter la zone thermique tout en assurant un bon contact thermique.

Le fonctionnement du dispositif selon l'invention va maintenant être décrit en relation avec les figures 2A à 2G, le dispositif devant produire dans les micro-capillaires des trains de chambres mobiles de réaction et de séparateurs. On suppose que les chambres de réaction sont constituées à partir d'une solution aqueuse qui se trouve à l'état congelé pour une température T₁ de -20°C et à l'état liquide à la température ambiante T₂. Les séparateurs sont formés d'huile qui se trouve à l'état liquide pour les températures T₁ et T₂.

Comme le montre la figure 2A, la vanne 13 est fermée et l'ensemble du dispositif est rempli d'huile 1. La zone thermique 31 est alors placée à la température T₁.

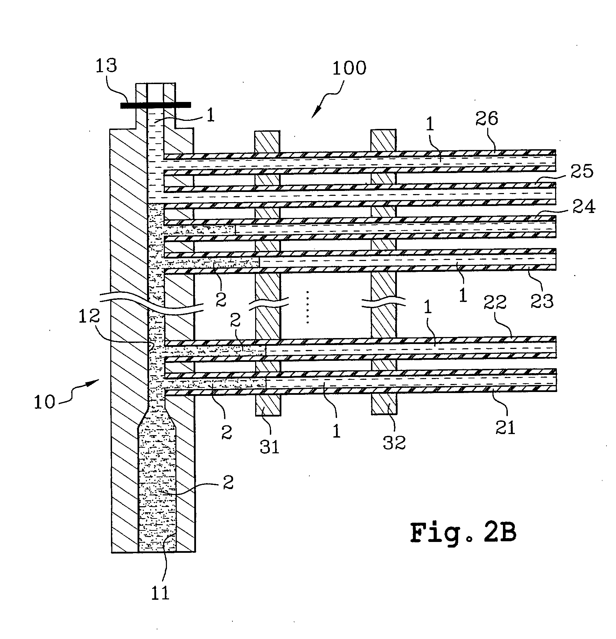

Comme le montre la figure 2B, une solution aqueuse de réaction 2 est introduite dans le canal d'injection 12 et commence à remplir les micro-capillaires 21 à 26 au fur et à mesure de sa progression dans le canal d'injection 12. Quand la solution 2 parvient au niveau de la zone thermique 31, la progression de cette solution dans le micro-capillaire concerné s'arrête à cause de la congélation de la solution dans cette zone. De cette manière, les parties des micro-capillaires compris entre leurs extrémités situées dans la pièce 10 et la zone thermique 31 sont toutes remplies du même volume de solution 2 si les micro-capillaires sont de section identique.

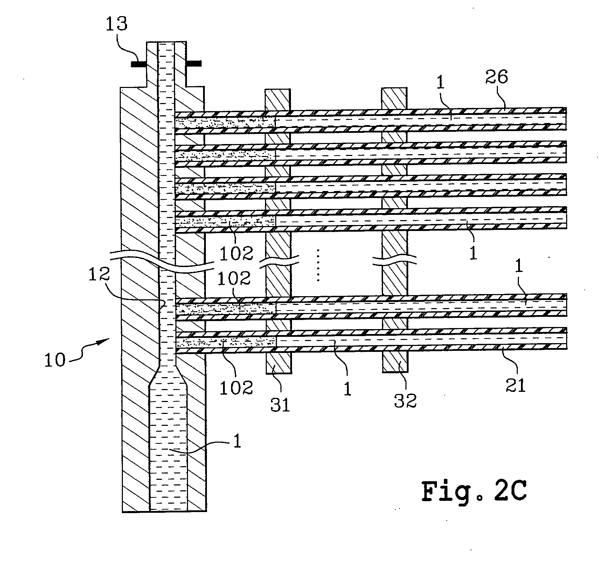

La vanne 13 est alors ouverte, ce qui permet de purger le canal d'injection 12 et de le remplir par le liquide destiné à former les bouchons de séparation, c'est-à-dire l'huile 1. C'est ce que montre la figure 2C. Des premières chambres de réaction 102 sont alors constituées.

La vanne 13 est alors fermée. La température de la zone thermique 31 passe de la température T₁ à la température T₂, ce qui a pour effet de décongeler la solution aqueuse au niveau de la zone 31 et de permettre la circulation des liquides dans les micro-capillaires 21 à 26.

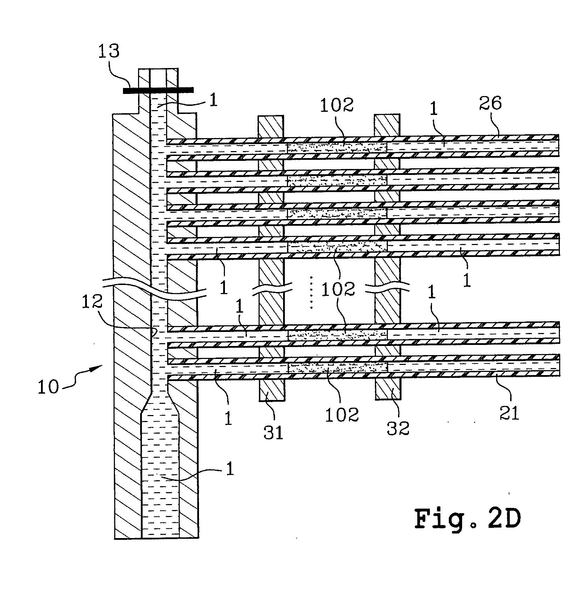

La zone thermique 32 passe de la température T₂ à la température T₁. De l'huile 1 continue d'être injectée, ce qui provoque le déplacement des chambres de réaction 102 formées précédemment vers la zone thermique 32. Les chambres de réaction 102 s'arrêtent en parallèle lorsqu'elles abordent la zone thermique 32, la solution aqueuse gelant à ce niveau. C'est ce que montre la figure 2D.

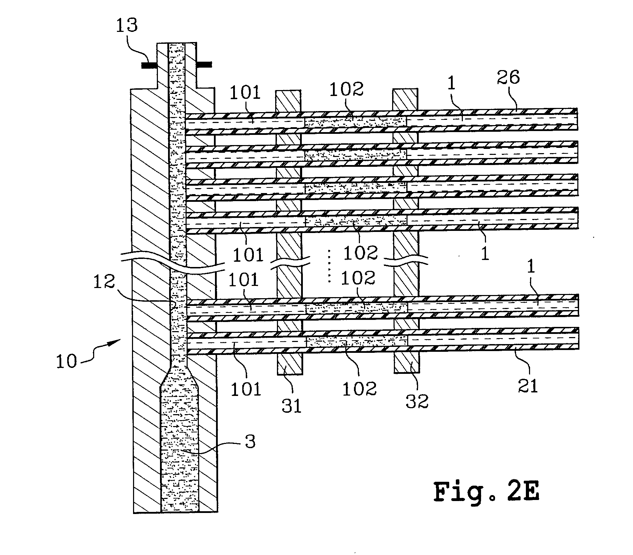

La vanne 13 est alors à nouveau ouverte. Le canal d'injection 12 est purgé et est rempli par une solution aqueuse de réaction 3 qui peut être différente de la solution aqueuse de réaction précédente (voir la figure 2E). De cette manière, on a formé un bouchon de séparation 101 dans chaque micro-capillaire à la suite de la chambre mobile de réaction formée précédemment. Chaque bouchon de séparation 101 a la même longueur.

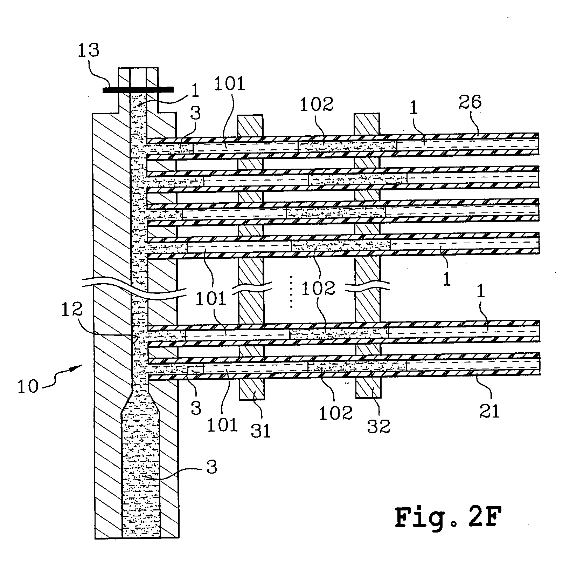

La vanne 13 est alors fermée. La zone thermique 32 passe de la température T₁ à la température T₂, ce qui permet la circulation des liquides dans les micro-capillaires 21 à 26 lorsque la solution aqueuse 3 continue à être injectée dans le canal d'injection 12 (voir la figure 2F).

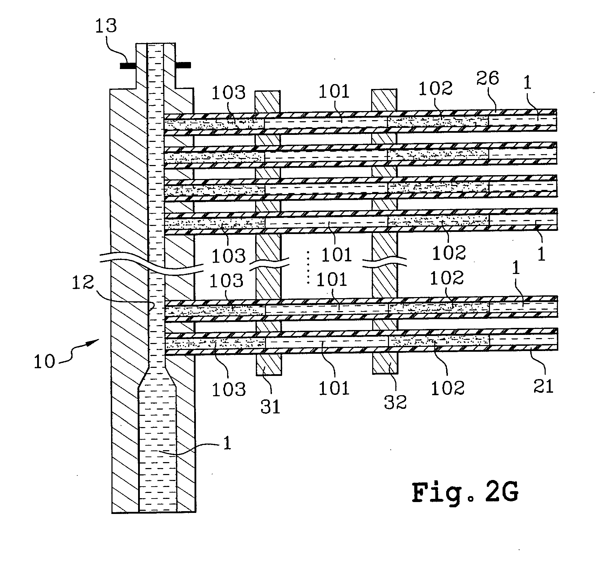

La zone thermique 31 est mise à la température T₁ ce qui provoque l'arrêt de la solution aqueuse 3 en cours d'injection dans les micro-capillaires 21 à 26 lorsque cette solution aqueuse 3 parvient au niveau de la zone thermique 31. La vanne 13 est alors ouverte. Le canal d'injection 12 est purgé et est rempli à nouveau par de l'huile 1, comme le montre la figure 2G. Des deuxièmes chambres de réaction 103 sont alors constituées.

Le cycle de création de bouchons de séparation et de chambres de réaction peut alors reprendre après avoir fait passer la zone thermique 31 à la température T₂.

Dans certains cas, un ou plusieurs constituants des chambres de réaction peuvent être sensibles aux basses températures ou à la congélation. Par exemple, certaines réactions biologiques impliquent l'utilisation d'enzymes dont l'activité est détruite lorsqu'elles se trouvent dans une solution aqueuse congelée. Dans de tels cas, le constituant sensible à la température peut être ajouté à la chambre de réaction après que celle-ci a franchi la seconde zone thermique 32, évitant de ce fait au constituant sensible d'être soumis à la température de congélation T₁. Les composants sensibles à la température peuvent alors être introduits dans les chambres de réaction par un grand nombre de voies possibles, par exemple en utilisant une pluralité de canaux latéraux connectés aux micro-capillaires 21 à 26 en position distale par rapport à la zone thermique 32 et prélevant le constituant sensible à la température dans un réservoir particulier.

Pendant certaines phases, les écoulements peuvent légèrement se désynchroniser. Ceci a été représenté sur la figure 2F où un décalage existe entre les chambres de réaction 102 déjà formées. En effet, il peut être difficile de garantir une relation débit/pression homogène sur tous les micro-capillaires. En particulier, avec des écoulements comportant des interfaces entre des liquides non miscibles, il a été constaté que la corrélation débit/pression est complexe. En effet, il est nécessaire de prendre en compte les forces de capillarité résultant des ménisques entre les deux faces. La maîtrise des phénomènes de mouillage/démouillage dans les canaux est de manière générale assez complexe et on peut constater un problème de désynchronisation d'un canal à l'autre. Cependant, le mode d'injection selon la présente invention permet de resynchroniser les écoulements à chaque injection. L'exemple de réalisation représenté par les figures 2A à 2G comprend deux zones d'intervention, les zones 31 et 32, mais d'autres zones peuvent être prévues afin de mieux contrôler l'avancement du train de réactions et de limiter la désynchronisation.

Les moyens de contrôle de la progression de l'un des deux liquides dans les micro-canaux peuvent s'appliquer à l'un ou l'autre des liquides à faire circuler. D'autres moyens de contrôle que les moyens thermiques peuvent être utilisés pour arrêter ou freiner la progression des liquides. On peut citer un mode de ralentissement par viscosité, un mode à effet magnétique, un mode à effet par électromouillage et un mode à pincement de tubes.

Le mode de ralentissement par viscosité peut être mis en oeuvre par la même structure que celle représentée aux figures 2A à 2G. Cependant, la température agit sur une différence de viscosité entre les deux phases, cette différence devant être plus importante lorsque les moyens de contrôle sont actifs.

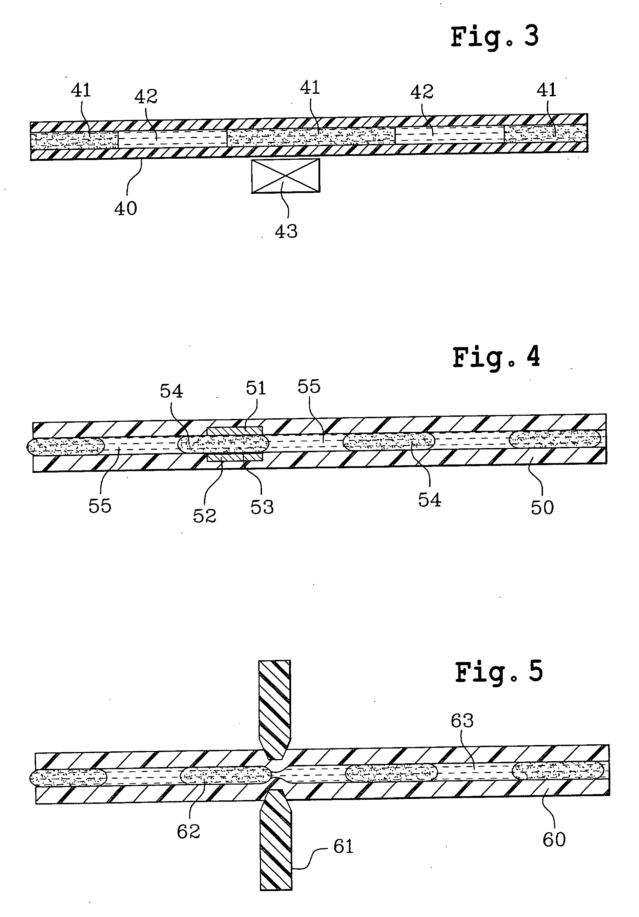

Pour illustrer le mode à effet magnétique, on n'a représenté sur la figure 3 qu'une portion d'un seul micro-canal ou micro-capillaire 40 en coupe longitudinale, étant entendu que le mode à effet magnétique s'applique sur tous les micro-canaux pour obtenir une injection parallélisée et synchronisée. L'un des deux liquides 41 et 42, par exemple le liquide 41, contient des particules ferro-magnétiques sensibles à un champ magnétique. Il s'agit alors d'un ferrofluide ou d'un fluide magnétique. L'autre liquide ne contient pas de particules ferro-magnétiques. Des aimants ou des électro-aimants 43 peuvent alors être utilisés à la place des zones thermiques du dispositif des figures 2A à 2G pour assurer les mêmes fonctions.

On peut également utiliser des fluides magnéto-rhéologiques dont la viscosité peut être augmentée d'un facteur 1000 sous l'effet d'un champ magnétique (voir le brevet américain N° 5 549 837).

Les moyens de contrôle de la progression de l'un des deux liquides peuvent agir par effet d'électromouillage. Par électromouillage ou électrocapillarité, on désigne la propriété de modification de l'énergie de surface entre un liquide et une paroi par l'application d'un champ électrostatique. On peut se reporter à ce sujet au document "Electrocapillarité et mouillage de films isolants par l'eau" de Bruno BERGE, C.R. Acad. Sci. Paris, t. 317, série II, pages 157 à 163, 1993 ou au document "Surface tension driven microactuation based on continuous electrowetting (CEW)" de Junghoon LEE et Chang-jin KIM, Journal of Microelectromechanical Systems, vol. 9, N° 2, pages 171 à 180, 2000. Cette propriété dépend de la nature des liquides (conductivité, perméabilité ...). Ainsi, il est possible d'agir sélectivement sur l'un des deux liquides circulant dans le dispositif. Il suffit alors de remplacer l'élément thermique utilisé dans le dispositif illustré par les figures 2A à 2G par un jeu d'électrodes permettant de créer un champ électrostatique dans les micro-capillaires.

Pour illustrer le mode à effet par électromouillage, on n'a représenté sur la figure 4 qu'une portion d'un seul micro-capillaire 50 en coupe longitudinale, étant entendu que ce mode s'applique sur tous les micro-capillaires pour obtenir une injection parallélisée et synchronisée. Le micro-capillaire 50 comporte deux électrodes 51 et 52 placées respectivement sur la paroi supérieure et sur la paroi inférieure du micro-capillaire 50. Dans cet exemple, une couche de passivation 53 est disposée sur l'électrode inférieure 52, du côté interne au micro-capillaire. Cette couche de passivation peut être disposée sur l'autre électrode 51 ou encore sur chacune des électrodes 51 et 52. Le micro-capillaire 50 véhicule un train de chambres mobiles de réaction 54, constituées d'une solution aqueuse, et de bouchons d'isolation 55 constitués d'un liquide isolant, par exemple de l'huile. Les propriétés diélectriques des liquides constituant les chambres mobiles 54 et les bouchons d'isolation 55 sont différentes. Quand une différence de potentiel est appliquée entre les électrodes 51 et 52 et que le liquide constituant une chambre de réaction 54 est présent entre les électrodes 51 et 52, on observe que la mouillabilité de ce liquide à la paroi est augmentée. Il est donc possible de modifier le comportement fluidique du micro-capillaire. En particulier, il est possible d'arrêter l'écoulement quand le liquide d'une chambre mobile 54 est présent au niveau des électrodes 51 et 52. Quand la différence de potentiel entre ces électrodes est supprimée, la circulation des liquides peut reprendre.

Pour illustrer le mode à pincement de tubes, on n'a représenté sur la figure 5 qu'une portion d'un seul micro-capillaire 60 en coupe longitudinale, étant entendu que ce mode s'applique sur tous les micro-capillaires pour obtenir une injection parallélisée et synchronisée. Le capillaire 60 présente au moins une portion déformable. Cette portion est par exemple en polymère ou en silicone. Le pincement de cette portion peut être effectuée par un système mécanique schématisé sous la référence 61.

Il est bien connu que la pression capillaire résultant d'un ménisque dans le capillaire dépend de la section du capillaire. Cette propriété est utilisée pour immobiliser des ménisques. Il suffit par exemple d'avoir une variation de section brusque dans le capillaire. Ceci a déjà trouvé certaines applications. A ce sujet, on peut se référer au document "Design analysis of capillary burst valves in centrifugal microfluids" de Jun ZENG et al., paru dans Micro Total Analysis Systems, 2000, Kluwer Academic Publishers, pages 579 à 582. Cette propriété peut être utilisée dans le cadre de la présente invention en remplaçant les zones thermiques du dispositif des figures 2A à 2G par un pincement des capillaires induisant une brusque variation de section dans le micro-canal.

De préférence, l'intérieur du micro-canal ou micro-capillaire 60 est hydrophobe, les chambres mobiles de réaction 62 sont formées d'une phase aqueuse et les bouchons de séparation 63 d'une phase non miscible avec la phase aqueuse, par exemple de l'huile. Ainsi, il est possible d'arrêter l'écoulement quand une nouvelle chambre mobile de réaction arrive au niveau du pincement. Le relâchement du pincement rend possible la circulation des trains de réactions.

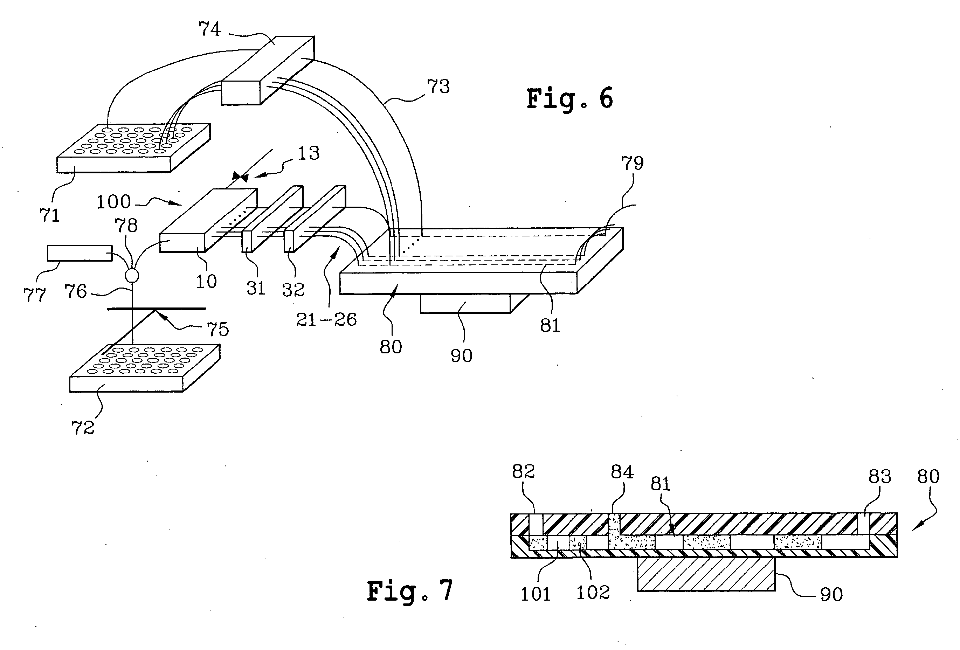

La figure 6 représente un réacteur biologique utilisant le dispositif d'injection parallélisée et synchronisée 100 selon l'invention dont le fonctionnement est illustré par les figures 2A à 2G.

La figure 6 montre une plaque à puits 71 contenant N échantillons à analyser et une plaque à puits 72 contenant M réactifs différents. Une analyse correspond à un mélange d'un réactif et d'un échantillon selon un protocole biologique. Le protocole biologique est réalisé dans un composant microfluidique ou micro-système 80 comportant des canaux 81. Le composant 80 est montré en coupe longitudinale sur la figure 7. Le nombre des canaux 81 est de préférence égal à N.

Le réacteur biologique de la figure 6 permet de réaliser N x M réactions en flux continu.

Chaque canal 81 est relié à l'un des puits de la plaque à puits 71 par des micro-tubes 73. Ainsi, le même échantillon circule toujours dans le même canal. Cette mise en oeuvre présente l'avantage d'éliminer tout risque de contamination entre deux échantillons différents. L'injection des échantillons peut être obtenue par une pompe 74, par exemple une pompe péristaltique.

La référence 75 désigne un robot schématisé qui permet de déplacer une aiguille ou pipette 76 dans chaque puits de la plaque à puits 72 contenant les M réactifs. L'aspiration des réactifs et leur injection vers le micro-système 80 sont assurées par un pousse-seringue 77 et une vanne de distribution 78. Le robot 75 permet aussi d'amener l'aiguille 76 vers un récipient (non représenté) contenant le liquide non miscible avec les réactifs et nécessaire à la formation des trains de réactions.

Les références 10, 13, 31, 32 et 21 à 26 désignent les mêmes éléments que ceux représentés sur la figure 2A. Les micro-capillaires du dispositif 100 sont bien sûr en nombre équivalent au nombre des canaux 81. Les références 31 et 32 désignent par exemple des zones thermiques.

La figure 7 montre le micro-système 80, obtenu par collage de deux plaques superposées. La coupe a été faite selon l'axe d'un canal 81 qui possède un orifice d'entrée 82 et un orifice de sortie 83.

Les capillaires 21-26 sont connectés au composant 80 par les orifices d'entrée 82. Suivant le protocole utilisé, les produits de réaction sont évacués vers une poubelle, vers un détecteur ou vers un autre micro-système par les orifices de sortie 83 connectés aux capillaires 79.

Le micro-système 80 comprend aussi des orifices 84 aboutissant dans les canaux 81. Ces orifices 84 reçoivent les microtubes 73. Un élément 90 est fixé sous le micro-système 80. Il s'agit par exemple d'un dispositif à effet Peltier qui permet de produire des cycles de température pour les liquides circulant dans les canaux 81.

Le dispositif d'injection selon l'invention permet de générer des trains de réactions comportant des chambres mobiles de réaction 102 et des bouchons de séparation 101 sur N capillaires de manière parallélisée et synchronisée. Les trains de réactions parviennent dans les canaux 81 du micro-système 80. Les chambres mobiles de réaction sont alors mélangées à des réactifs amenés dans les orifices 84 par les micro tubes 73 pour donner des produits de réaction 110. La configuration utilisée permet ainsi d'effectuer les NxM réactions différentes en flux continu.

Les dispositifs et le procédé selon l'invention peuvent être utilisés pour réaliser une grande variété de protocoles biologiques, biochimiques ou chimiques, incluant des réactions d'amplification (par exemple PCR ou LCR), des analyses génotypiques (par exemple le microséquençage), des procédés de caractérisation structurelle de polysaccharides complexes, des protocoles de synthèse chimique, etc...

A titre d'exemple, il est possible avec ce réacteur biologique d'effectuer une réaction d'amplification d'ADN, en particulier une PCR (pour "Polymerase Chain Reaction"). On peut se reporter à ce sujet au document WO-A-01/07159 qui divulgue un micro-système du type référencé 80 sur les figures 6 et 7 et un mode de réalisation du protocole de la PCR en flux continu dans des canaux rectilignes traversant des zones à température variable. Le nombre de réactions obtenues est par exemple de 96 x 96 lorsque l'on utilise des plaques à 96 puits pour les échantillons d'ADN et les réactifs de PCR.

L'invention procure de nombreux avantages par rapport à l'art antérieur. Les trains de réaction peuvent être constitués de réactifs différents. L'injection s'effectue en parallèle sur une pluralité de capillaires avec des volumes pouvant être inférieurs au µl, les volumes étant injectés alors avec une précision d'au moins 0,01 µl. Elle peut être améliorée par un dimensionnement approprié des capillaires et des zones de réaction. La commande est commune à tous les capillaires. Les volumes morts sont très petits. En effet, le volume mort sur l'ensemble des capillaires est de l'ordre du volume du canal d'injection 12. Le train de réactions injecté peut comporter un nombre illimité de réactifs (200 par exemple ou plus). Le système selon l'invention est simple à mettre en oeuvre : pas d'asservissement, pas de technologie complexe. Le dimensionnement du système (distance entre le canal d'injection 12 et les zones 31, 32) permet de calibrer automatiquement les volumes des chambres mobiles de réaction et des bouchons de séparation. Les écoulements sur tous les capillaires restent calibrés. Il est possible d'utiliser plusieurs modes de fonctionnement, ce qui permet de choisir le mode optimum, compatible avec l'application visée. L'injection est compatible avec un stockage des réactifs dans tout type de plaque à puits utilisée en biologie.

## Revendications

1. Dispositif microfluidique d'injection parallélisée et synchronisée de trains de chambres mobiles de réaction (102, 103) avec séparateurs (101) non miscibles dans des micro-canaux (21 à 26), comprenant :
- des moyens d'injection (10) pour injecter en alternance et en parallèle dans les micro-canaux du liquide pour former les chambres mobiles de réaction et du liquide pour former les séparateurs,
- des premiers moyens de contrôle de la progression de l'un des deux liquides dans les micro-canaux, disposés pour intervenir sur une zone (31) de chaque micro-canal délimitant un volume à injecter de ce liquide dans chaque micro-canal, les premiers moyens de contrôle étant aptes à provoquer, lorsqu'il sont mis en oeuvre, l'arrêt ou le ralentissement de la progression de ce liquide sur ladite zone de chaque micro-canal en exerçant une action basée sur une propriété physico-chimique de ce liquide, cette action n'ayant pas d'effet direct sur l'autre liquide.

2. Dispositif microfluidique selon la revendication 1, **caractérisé en ce que** lesdits premiers moyens de contrôle sont des moyens permettant de déplacer ladite zone d'intervention de chaque micro-canal afin de modifier le volume à injecter dudit un des deux liquides.

3. Dispositif microfluidique selon l'une des revendications 1 ou 2, **caractérisé en ce que** les moyens d'injection comprennent une pièce (10) possédant un canal d'injection (12) communiquant avec les premières extrémités des micro-canaux (21 à 26).

4. Dispositif microfluidique selon la revendication 3, **caractérisé en ce que** le canal d'injection (12) a l'une de ses extrémités communiquant avec une entrée de canal (11) par où les liquides sont injectés, l'autre de ses extrémités étant équipée de moyens d'évacuation des liquides présents dans le canal d'injection (12).

5. Dispositif microfluidique selon la revendication 4, **caractérisé en ce que** les moyens d'évacuation comprennent une vanne (13).

6. Dispositif microfluidique selon l'une quelconque des revendications 1 à 5, **caractérisé en ce que** les premiers moyens de contrôle sont choisis parmi des moyens fonctionnant en mode thermique, des moyens fonctionnant en mode de ralentissement par viscosité, des moyens fonctionnant en mode à effet magnétique, des moyens fonctionnant en mode à effet par électromouillage et des moyens fonctionnant en mode à pincement de tubes.

7. Dispositif microfluidique selon la revendication 6, **caractérisé en ce que** les premiers moyens de contrôle fonctionnant en mode thermique, les moyens de contrôle sont choisis parmi des dispositifs à effet Peltier et des dispositifs à fluide caloporteur.

8. Dispositif microfluidique selon la revendication 7, **caractérisé en ce que** les premiers moyens de contrôle fonctionnant en mode thermique sont des moyens aptes à provoquer la congélation de l'un des deux liquides.

9. Dispositif microfluidique selon la revendication 3, **caractérisé en ce que** le canal d'injection (12) et ladite zone (31) de chaque micro-canal sont disposés de manière parallèle, les micro-canaux (21 à 26) leur étant perpendiculaires.

10. Dispositif microfluidique selon l'une quelconque des revendications 1 à 9, **caractérisé en ce qu'**il comprend en outre au moins des deuxièmes moyens de contrôle de la progression dudit liquide parmi les deux liquides, placés en aval des premiers moyens de contrôle et étant aptes à provoquer, lorsqu'ils sont mis en oeuvre, l'arrêt ou le ralentissement de la progression de ce liquide sur une zone (32) de chaque micro-canal en exerçant une action basée sur une propriété physico-chimique de ce liquide, cette action n'ayant pas d'effet direct sur l'autre liquide.

11. Dispositif microfluidique selon la revendication 10, **caractérisé en ce que** les deuxièmes moyens de contrôle sont choisis parmi des moyens fonctionnant en mode thermique, des moyens fonctionnant en mode de ralentissement par viscosité, des moyens fonctionnant en mode à effet magnétique, des moyens fonctionnant en mode à effet par électromouillage et des moyens fonctionnant en mode à pincement de tubes.

12. Dispositif microfluidique selon la revendication 11, **caractérisé en ce que** les deuxièmes moyens de contrôle fonctionnant en mode thermique, les moyens de contrôle sont choisis parmi des dispositifs à effet Peltier et des dispositifs à fluide caloporteur.

13. Dispositif microfluidique selon la revendication 12, **caractérisé en ce que** les deuxièmes moyens de contrôle fonctionnant en mode thermique sont des moyens aptes à provoquer la congélation de l'un des deux liquides.

14. Réacteur biologique comprenant :
- des premiers moyens distributeurs de liquide pour former des chambres mobiles de réaction,
- des deuxièmes moyens distributeurs de liquide pour former des séparateurs non miscibles,
- un dispositif microfluidique (100) selon l'une quelconque des revendications 1 à 13 dont les moyens d'injection (10) sont reliés en alternance aux premiers moyens distributeurs et aux deuxièmes moyens distributeurs pour fournir, dans les micro-canaux (21 à 26) du dispositif microfluidique, des trains de chambres mobiles de réaction avec séparateurs non miscibles,
- un micro-système (80) permettant de réaliser un protocole biologique sur des échantillons circulant dans des canaux (81) du micro-système, le micro-système comprenant pour chaque canal un premier orifice d'entrée (82) relié à un micro-canal (21 à 26) correspondant du dispositif microfluidique (100) et un deuxième orifice d'entrée (84) relié à des moyens d'injection d'échantillons correspondants dans les chambres de réaction.

15. Procédé de mise en oeuvre d'un protocole biologique, biochimique ou chimique sur des échantillons comprenant :
- la formation dans un dispositif microfluidique (100) selon l'une quelconque des revendications 1 à 13 de trains de chambres mobiles de réaction avec séparateurs non miscibles dans des micro-canaux (21 à 26), les trains étant formés en parallèle et de manière synchronisée,
- l'injection simultanée des trains de chambres mobiles de réaction avec séparateurs non miscibles, formés dans les micro-canaux (21 à 26) du dispositif microfluidique (100), dans les canaux (81) d'un micro-système (80) en nombre correspondant aux micro-canaux (21 à 26) du dispositif microfluidique,
- l'injection simultanée et en parallèle des échantillons dans les canaux (81) du micro-système (80) pour les mélanger de manière synchronisée aux chambres mobiles de réaction circulant dans les canaux (81) du micro-système (80),
- la réalisation du protocole biologique, biochimique ou chimique sur les échantillons ayant été mélangés aux chambres mobiles de réaction.
